# EUROPEAN PATENT SPECIFICATION

(11) **EP 3 168 315 B1**
(45) Date of publication and mention of the grant of the patent: **20.02.2019**
(21) Application number: 15815816.2
(22) Date of filing: 24.06.2015
(51) Int. Cl.: C22B 7/04, C22B 7/00, C22B 21/00

(54) **DEVICE AND METHOD FOR RECOVERING A NON-FERROUS METAL FROM HOT DROSS**
VORRICHTUNG UND VERFAHREN ZUR RÜCKGEWINNUNG EINES NICHTEISENMETALLS AUS HEISSER SCHLACKE
DISPOSITIF ET PROCÉDÉ POUR EXTRAIRE UN MÉTAL NON FERREUX DE SCORIES CHAUDES

(30) Priority: 04.07.2014 RU 2014127430
(43) Date of publication of application: 17.05.2017
(73) Proprietor: Light Metals Ltd., Krasnoyarsk 660093 (RU)
(72) Inventor: POPOV, Yury Nikolaevich, Krasnoyarsk 660093 (RU); POLYAKOV, Peter Vasilievich, Krasnoyarsk 660093 (RU); POPOVA, Olga Nikolaevna, Krasnoyarsk 660093 (RU)
(74) Representative: Jeck, Anton
(86) International application number: PCT/RU2015/000387
(87) International publication number: WO 2016/003321

(56) References cited:
- RU-C1- 2 159 295
- RU-C1- 2 494 157
- RU-C1- 2 494 157
- US-A- 5 882 580
- US-A- 6 063 330
- US-A1- 2011 283 833
- US-B1- 6 228 319

## Description

The invention relates to recycling of non-ferrous metals, preferably of aluminum, alloys thereof, magnesium, zinc from hot dross removed from melting furnaces, mixers and other thermal apparatuses.

Apparatuses for compression of hot dross of non-ferrous metal, preferably aluminum, alloys thereof, magnesium, zinc dross, comprising dross compressing head with ribbed or non-ribbed surfaces and skim pan with or without ribbed surfaces, as well as having one or more through drainage holes in bottom are known in the prior art [1-18].

Apparatus for compression of hot dross of non-ferrous metal, preferably aluminum, alloys thereof, magnesium, zinc dross, comprising frame with dross compressing externally ribbed head of semispherical or elongated semispherical shape; skim pan with one or more through drainage holes in bottom, wherein the skim pan is located on the top of sow mould, which collects drained from dross metal is known in the pri-or art [19].

The semispherical or elongated semispherical press head is integrated with the skim pan, where within dross compression external metal layers are generated, which are crystallized near the surfaces of said head and skim pan, and internal layer of metal oxide, which is located between the metal layers [19].

Ribbed surfaces of the press head and skim pan provide higher specific pressure onto dross and grooving of the dross, facilitating breakage and subsequent supplemental extraction of metal from frozen pressed dross (skull) [19].

The head is hollow and equipped with forced air or liquid cooling, which reduces dross cooling time and decreases metal oxidation loss [19].
1. It is known a method [20] for recovery of free aluminum metal from a metal bearing dross containing free aluminum metal and oxides of said metal, said method comprising the steps of:
   (a) collecting the dross in a receptacle of the type having at least one trough with at least one downwardly and inwardly inclined side wall with metal flow passages through the wall;
   (b) collecting the free aluminum metal which decants through the passages;
   (c) mechanically compacting the dross by applying a compressive force on the dross and against the inclined wall above a threshold pressure to pool free aluminum metal within a dross, effect migration of the free aluminum metal toward a boundary surface of the compacted dross, decant a portion of said free aluminium through the passage and inhibiting the oxygen supply to the free aluminum metal in the dross; and
   (d) cooling the compacted dross and free aluminum metal to solidify the free aluminium metal; such that thermite reaction of free aluminum metal and oxygen in the dross is diminished by the combination of compacting above the threshold pressure and cooling of the metal.
2. It is known the method of claim 1 [20] including the subsequent step of mechanically breaking the compacted dross to recover additional solidified free aluminum metal.
3. It is known the method of claim 2 [2] including the step of separating free aluminum metal from the oxide.
4. It is known the method of claim 1 [20] wherein the threshold pressure of the mechanical compression of the dross in operation © is about 64 pounds per square inch.
5. It is known the method [20] for recovery of free aluminum metal from aluminum metal bearing dross where said dross also includes oxide impurities, said method comprising the steps of:
   (a) collecting the dross in a receptacle of the type having at least one trough with at least one downwardly and inwardly inclined sidewall having metal flow passages through the wall;
   (b) collecting free aluminum metal which decants through the passages;
   (c) mechanically compacting the dross by applying a compressive force on the dross and against the inclined wall above the threshold pressure to pool free aluminum metal within the dross, effect migration of the free aluminum metal toward a boundary surface of the compacted dross, decant a portion of said free aluminum metal through the passages and inhibit the oxygen supply to the free aluminum metal in the dross;
   (d) cooling the compacted dross and free aluminum metal to solidify the free aluminium metal; such that thermite reaction of free aluminum metal and oxygen in the dross is diminished by the combination of compacting above the threshold pressure and cooling of the metal;
   (e) removing compacted dross from the skimpan;
   (g) separating the components of the dross having a larger mean diameter from the remainder of the dross, said larger mean diameter components generally comprising metal, said remainder including a granulate and an oxide dust; and
   (h) melting substantially the granulate reminder of the dross to thereby segregate a molten metal portion from the reminder of the dross.
6. It is known the method [21] for the recovery of free aluminum metal from hot aluminium dross which forms on the surface of molten aluminum during aluminum melting operations, said dross containing free aluminum metal and a solids network, said method comprising the steps of:
   (a) charging the hot dross from the aluminum melting operation into a receptacle having at least one inclined sidewall and at least one passageway;
   (b) mechanically compacting the dross with a heated ram, said compacting applying a compressive force on the dross towards the inclined sidewall such that a substantial portion of the free aluminum separates from the dross and passes through the bottom passageway;
   (c) maintaining the temperature of the hot dross during its collection in the receptacle and subsequent mechanical compaction so as to enhance the removal of free aluminum therefrom; and
   (d) collecting the free aluminum metal which passes through the bottom passageway.
7. It is known the method [21] wherein the dross is mechanically compacted by applying a series of successive strokes on the dross towards the inclined sidewall.
8. It is known the method [21] wherein 3 to 10 strokes are applied.
9. It is known the method [21] wherein the head external surface and skimpan internal surface can be semi-spherically shaped, conical, concave and convex in shape.
10. It is known the method [21] wherein further comprising cooling the compacted dross after said compacting, said cooling minimizing further oxidation of any free aluminum contained within the compacted dross.
11. It is known the method [21] for the recovery of free aluminum metal from hot aluminium dross which forms on the surface of molten aluminum during aluminum melting operations, said dross containing free aluminum metal and a solids network, said method comprising the steps of:
   (a) heating a compressing head and a skimpan to a temperature approximating that of the hot dross to inhibit cooling of the dross during the subsequent charging and mechanical compaction steps, said skimpan having at least one inclined sidewall and at least one passageway extending through the bottom of the skimpan, said bottom passageway being sized and configured to permit the passage of free aluminum and inhibit the passage of said solids network;
   (b) charging the hot dross from the aluminum melting operation into the heated skimpan;
   (c) mechanically compacting the dross with the heated head by applying a compressive force on the dross towards the inclined sidewall such that a substantial portion of the free aluminum separates from the dross and passes through the bottom passageway; and
   (d) collecting the free aluminum metal which passes through the bottom passageway.
12. It is known the method [21] wherein the head and skimpan are heated by directing a flame into a gap existing between the head surface and the skimpan sidewall surface when the head is partially inserted into the skimpan.
13. It is known the method [21] wherein the compressing head and skimpan are heated by embedding heating coils therein.
14. It is known the method [21] for the recovery of free aluminum metal from hot aluminium dross which forms on the surface of molten aluminum during aluminum melting operations, said dross containing free aluminum metal and a solids network, said method comprising the steps of:
   (a) charging the hot dross from the aluminum melting operation into a skimpan having at least one inclined sidewall and at least one passageway extending through the bottom of the skimpan said bottom passageway being sized and configured to permit the passage of free aluminum and inhibit the passage of said solids network;
   (b) mechanically compacting the dross by applying a compressive force on the dross towards the inclined sidewall such that a substantial portion of the free aluminum separates from the dross and passes through the bottom passage, said compacting being provided by an upward stroke of the skimpan towards a fixed ram;
   (c) maintaining the temperature of the hot dross during its collection in the skimpan and subsequent mechanical compaction so as to enhance the removal of free aluminum therefrom; and
   (d) collecting the free aluminum metal which passes through the bottom passageway. A drawback of the aforementioned method [21]is that due to the preliminary heating of the head, and other conditions being equal, the dross cooling cycle time increases, and hence, as a result of longer oxidation time of aluminum, the metal recovery decreases.

A drawback of the aforementioned methods [20,21] and apparatus [1-19] is that the amount of metal, drained from hot dross, the so called in-house metal recovery, is usually relatively lower (from 3 to 20 %), than the metal content remaining in dross skull after freezing (from 40 to 70 %). Further secondary recovery of metal from frozen dross is as a rule accompanied with its supplemental mechanical and/or thermal treatment (melting), which results in additional metal loss.

It is known the apparatus [22] for recovery of non-ferrous metal from hot dross, comprising a frame with dross compressing head, a sow mould for collection of drained metal from hot dross and a skim pan, provided with one or more through drainage holes in a bottom put on a said sow mould, characterized in that provided with at least one through hole with connection for switching on vacuum through said sow mould wall, sealing located in the gap between said skim pan and said sow mould.

A drawback of the aforementioned prototype [22] is that the location of through hole with connection for switching on vacuum through said sow mould wall, in case of hot dross with high aluminium content (more than 55%), could be a probability overlapping/blocking of the Aforementioned hole by drained metal in sow mould in case of high fullness. It is not allowing to drain more metal into sow mould.

This invention is aimed at increase in recovery of non-ferrous metal from dross.

Technical result is achieved in the apparatus for recovery of non-ferrous metal from hot dross, preferably aluminum, alloys thereof, magnesium, zinc from hot dross removed from melting furnaces, mixers and other thermal apparatuses, comprising a frame with dross compressing head, a sow mould for collection of drained metal from hot dross and a skim pan put on a said sow mould, characterized in that provided with one or more through holes with connection for switching on vacuum through said skim pan bottom, and sealing located in the gap between said skim pan and said sow mould, wherein said skimpan provided with one or more through drainage holes in a bottom. The location of through holes with connection for switching on vacuum through said skim pan bottom is more preferable, than in sow mould wall. The reason is that through holes with connection for switching on vacuum through said skim pan bottom is always located higher than in sow mould, consequently, less probability for said through hole to be overlapped/blocked by drained metal in case of high fullness. It allows to drain more metal in sow mould.

The apparatus can comprise sealing between the dross compressing head and said skim pan.

The head can be ribbed. The skim pan can be ribbed.

The head can be made hollow with at least two manifolds with air cooling.

The apparatus can comprise hermetic cover, hermetically female the rod of hydraulic cylinder with a possibility of sliding along the rod and hermetically to cover the skim pan.

The apparatus can comprise hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive.

The apparatus can comprise hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive and, at least one or more through hole in said cover provided a connection for inert gas supply.

The apparatus can comprise one or more vibrators of said skim pan and/or said head.

The apparatus can comprise one or more magneto-hydrodynamic (MHD) pumps for moving of metal to one or more drainage holes in the bottom of said skim pan.

Vacuum promotes recovery of liquid metal from pores of hot dross and drainage via through holes in the bottom of said skim pan, that is, increases recovery of metal from dross.

Vacuum also promotes flow of liquid metal in the layer adjacent to the bottom of the skim pan, accelerates heat and mass transfer, cooling of metal in dross, decreases metal oxidation, increases metal recovery from dross.

Semispherical or elongated semispherical press head is integrated with said skim pan, wherein within dross compression external layers of metal are formed, which are crystallized mainly near surfaces of said head and said skim pan, and internal layer of metal oxide, which is capsulated between the metal layers.

Hot dross compressing head draws off thermal energy from dross due to thermal conductivity and thermal capacity, decreases access of air oxygen to hot metal in dross, decreases its oxidation and possible thermite reactions.

Ribbing of press head provides increase in surface area of contact with dross, increases energy heat transfer from dross to said head, thus facilitating early cooling of dross and decrease in metal oxidation in dross.

Ribbing of press head provides high specific pressure onto dross and grooving of the dross, facilitating breakage and subsequent supplemental recovery of metal from frozen pressed dross (skull).

There is a frame with a dross compressing head provided with a power drive, particularly, hydraulic cylinder with a rod.

Within compression of hot dross, as a rule with higher metal content in excess of 50 %, fine metal particles coagulate and coalesce into coarser particles, and external dross surfaces are metalized and compressed. Herewith, there occurs natural sealing of the gap between said compressing head and skim pan, and vacuum via through hole in said skim pan and drainage hole in the bottom of skim pan, provided that there exists sealing between said sow mould and said skim pan, promotes increase in drainage of liquid metal from hot dross. However, in the case of low metal content in dross, below 50 %, metallization and compressing of external surfaces of dross can be inefficient. In such case additional sealing is applied between the dross compressing head and skim pan.

Particularly, in case of additional sealing necessity, the apparatus can comprise additional hermetic cover, hermetically female the rod of hydraulic cylinder with a possibility of sliding along the rod and hermetically to cover the skim pan.

With a purpose to reduce the additional cover movement time, the apparatus can comprise additional hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive.

With a purpose of additional insulation from the air oxygen and pressure increase from the head side, the apparatus can comprise additional hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive and, at least one or more through hole in said cover provided a connection for inert gas supply.

The apparatus can comprise one or more vibrators of said skim pan and/or said head, further comprising one or more magneto-hydrodynamic (MHD) pumps facilitating for moving of metal to one or more drainage holes in the bottom of said skim pan.

The head can be hollow with air cooling, which reduces dross cooling time and decreases metal oxidation loss. The walls of said sow mould are preferably made of alloyed steel or cast iron.

The brief description of the invention is explained referring to the drawings below:

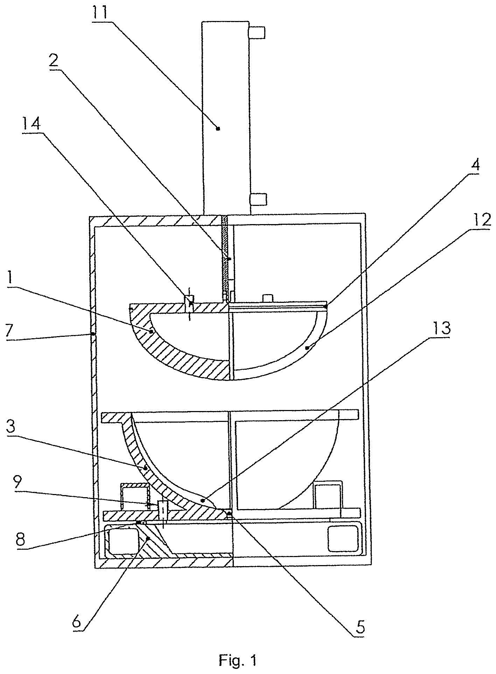

- Fig. 1.: General front side view of the apparatus for recovery of non-ferrous metal from hot dross provided with through hole in the skim pan bottom with connection for switching on vacuum "manually" just after the positioning of the skim pan inside of the said apparatus by means of a forklift.

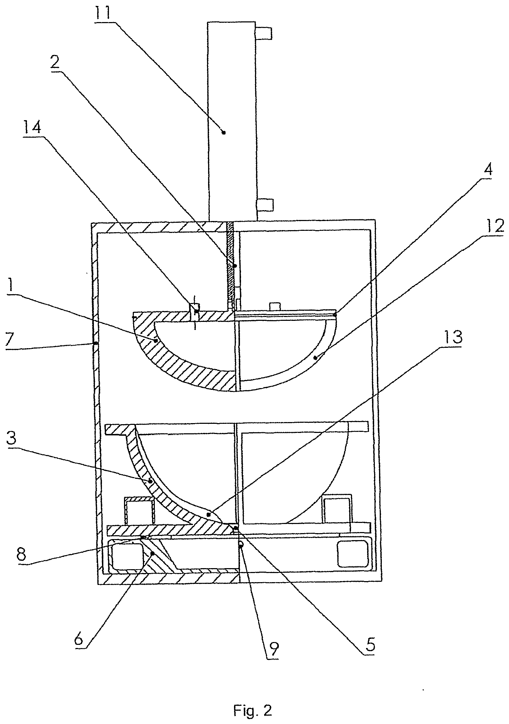

- Fig.2.: Back side view with a partial section of the apparatus for recovery of non-ferrous metal from hot dross provided with through hole in the skim pan bottom with connection for switching on vacuum, providing an automatic coupling of said skim pan with vacuum source (piping to vacuum pump) at the moment of positioning of the skim pan inside of the said apparatus by means of a forklift.

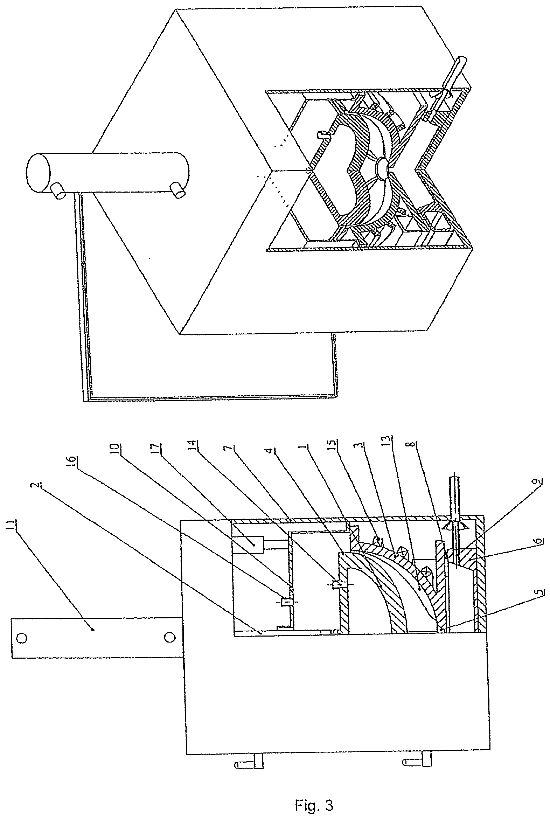

- Fig.3.: General view with a partial section of the apparatus for recovery of non-ferrous metal from hot dross provided with an additional hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive.

The apparatus comprises the head 1 with rod 2 for compression of hot dross, skimmed from melt surface in furnace/mixer and loaded into skim pan 3, provided with sealing 4 between head 1 and skim pan 3. Skim pan 3 provided with one or more through holes 5 in bottom for drainage of drained metal into lower sow mould 6. Drained metal is collected in the sow mould 6. There are sealing 8 between skim pan 3 and sow mould 6, and at least one through hole 9 with a connection for switching on vacuum through said skim pan bottom 3. There is a frame 7 with a dross compressing head 1 provided with a power drive 11, particularly, hydraulic cylinder with a rod 2.

The head 1 either does not have or has ribbing 12. Skim pan 3 either does not have or has ribbing 13. The dross compressing head 1 could be made hollow with at least two manifolds 14 with air cooling.

One or more vibrators of said skim pan and/or said head, further comprising one or more magneto-hydrodynamic (MHD) pumps 15 [fig.2] facilitate for moving of metal to one or more drainage holes 5 in the bottom of said skim pan 3.

In the case of low metal content in dross, below 50 %, metallization and compressing of external surfaces of dross can be inefficient. In such case additional sealing 4 is applied between the dross compressing head 1 and skim pan 3.

Particularly, in case of additional sealing necessity, the apparatus can comprise additional hermetic cover 10 [fig.2-3], hermetically female the rod 2 of hydraulic cylinder 11 with a possibility of sliding along the rod 2 and hermetically to cover the skim pan 3.

With a purpose to reduce the additional cover movement time, the apparatus can comprise additional hermetic cover 10, hermetically female the rod 2 of hydraulic cylinder 11 with a possibility of sliding along the rod 2 and hermetically to cover the skim pan 3 by means of pneumatic or/and hydraulic cylinders 17 (from 1 to 4 pcs), or/and electric drive [fig.2-3].

With a purpose of additional insulation from the air oxygen and pressure increase from the head side, the apparatus can comprise additional hermetic cover 10, hermetically female the rod 2 of hydraulic cylinder 11 with a possibility of sliding along the rod 2 and hermetically to cover the skim pan 3 by means of pneumatic or/and hydraulic cylinders 17 (from 1 to 4 pcs), or/and electric drive and, at least one or more through hole 16 in said cover providing a connection for inert gas supply.

The apparatus operation is as following:
The skimpan 3 is put on the sow mould 6 by means of forklift. Hot dross is to be skimmed from the melting/holding furnace melt surface into the skim pan 3 which is put on the sow mould 6. The set of said skim pan 3 put on the sow mould 6 is to be placed by means of forklift into the apparatus for hot dross compression (press), provided the said seal 8 is located between said skim pan 3 and sow mould 6 and with one or more through holes 9 with connection for switching on vacuum through said skim pan 3 bottom. The head 1 with rod 2 compress the hot dross, and the head 1 can be made hollow with at least two manifolds 14 to be cooled with air.

The sealing 4 between said head 1 and skim pan 3 promote a vacuumization.

In case of additional sealing necessity, the apparatus can comprise additional hermetic cover 10 [Fig.2-3], hermetically female the rod 2 of hydraulic cylinder 11 with a possibility of sliding along the rod 2 and hermetically to cover the skim pan 3.

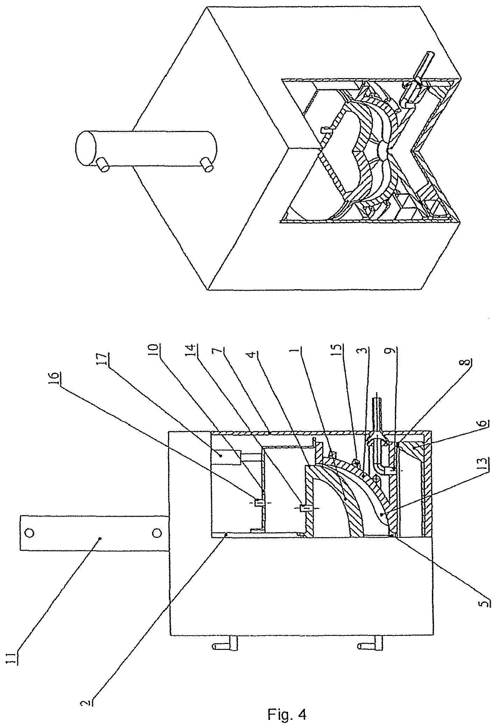

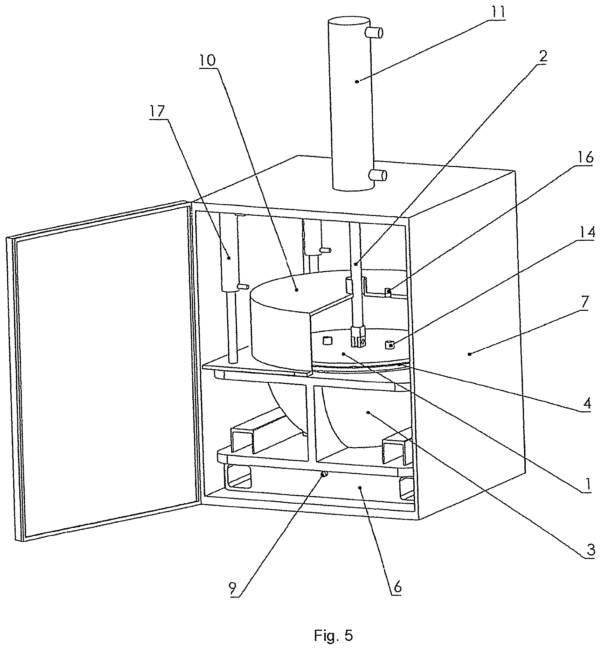

With a purpose to reduce the additional cover 10 movement time, the apparatus can comprise additional hermetic cover 10, hermetically female the rod 2 of hydraulic cylinder 11 with a possibility of sliding along the rod 2 and hermetically to cover the skim pan 3 by means of pneumatic or/and hydraulic cylinders 17 (from 1 to 4 pcs) [Fig.3-5], or/and electric drive [Fig.2-3],.

The drained metal is to be collected in the said sow mould 6.

In comparison with the prototype, other conditions being equal, vacuum and/or vibrator of head and/or skim pan, and/or MHD pumps facilitate increase in metal recovery from dross.

### References cited:

1. Patent US 201817, October 1878, Rees.
2. Patent US 563769, July 1896, Howard.
3. Patent US 2278135, August 1942, Osborn.
4. Patent US 3198505, August 1965, Amdur et al.
5. Patent US 3517918, June 1970, Cenkner.
6. Patent US 3999980, December 1976, Montagna.
7. Patent US 4003559, January 1977, Kuwano et al.
8. Patent US 4057232, November 1977, Ross et al.
9. Patent US 4527779, July 1985, Roth D.
10. Patent US 4575056, March 1986, Jilliard et al.
11. Patent US 4637591, January 1987, McMahon et al.
12. Patent US 4772320, September 1988, van Linden et al.
13. Patent US 5669657, September 1997, Roth D
14. Patent US 5788918, August 4, 1998, Bramley.
15. Patent US 5882580, March 16, 1999, Pawnall.
16. Patent US 5906790, May 1999, Bramley.
17. Patent US 5980817, November 9, 1999, Pawnall.
18. Patent US 6063330, May 2000, Bramley.
19. Patent US 5397104, March 1995. Roth D.
20. Patent US 4386956, June 1983, Roth D.
21. Patent US 4565572, January 1986 van Linden at al.
22. Patent RU 2494157, September 2013.

## Claims

1. Apparatus for recovery of non-ferrous metal from hot dross, comprising a frame with dross compressing head, a sow mould for collection of drained metal from hot dross and a skim pan, provided with one or more through drainage holes in a bottom put on a said sow mould, **characterized in that** provided with at least one through hole with connection for switching on vacuum through said skim pan bottom, sealing located in the gap between said skim pan and said sow mould.

2. The apparatus of claim 1, further comprising a seal between said dross compressing head and said skim pan.

3. The apparatus of claim 1 or 2, wherein comprising hermetic cover, hermetically female the rod of hydraulic cylinder with a possibility of sliding along the rod and hermetically to cover the skim pan.

4. The apparatus of claim 1 or 2, wherein comprising hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive.

5. The apparatus of claim 1 or 2, wherein comprising hermetic cover, hermetically female the rod of hydraulic cylinder with a possibility of sliding along the rod and hermetically to cover the skim pan by means of pneumatic or/and hydraulic cylinders (from 1 to 4 pcs), or/and electric drive and, at least one or more through hole in said cover provided a connection for inert gas supply.

6. The apparatus of claim 1 or 2, further comprising one or more vibrators of said skim pan and/or said head.

7. The apparatus of claim 1 or 2, further comprising one or more magneto-hydrodynamic (MHD) pumps for moving of metal to one or more drainage holes in the bottom of said skim pan.

8. The apparatus of claim 1 or 2, wherein said head is made hollow with at least two manifolds with air cooling.

9. The apparatus of claim 1 or 2, wherein the head is ribbed.

10. The apparatus of claim 1 or 2, wherein the skimpan is ribbed.

## Patentansprüche

1. Apparat zur Wiedergewinnung von Nichteisenmetallen aus Heißgekrätz mit einem Rahmen, der einen Gekrätzdruckkopf, eine Aussaatform zur Aufnahme von drainiertem Metall aus dem Heißgekrätz und eine Abschöpfpfanne aufweist, wobei die Aussaatform in ihrem Boden mit einem oder mehreren Drainagelöchern versehen ist,
**dadurch gekennzeichnet,**
**dass** der Boden der Aussaatform mit mindestens einem Durchgangsloch versehen ist, durch das eine Verbindung zum Erzeugen eines Vakuums durch den Boden der Abschöpfpfanne hergestellt ist, wobei die Verbindung abgedichtet im Spalt zwischen der Abschöpfpfanne und der Aussaatform angeordnet ist.

2. Apparat nach Anspruch 1,
**dadurch gekennzeichnet,**
**dass** er ferner eine Dichtung zwischen dem Gekrätzdruckkopf und der Abschöpfpfanne aufweist.

3. Apparat nach Anspruch 1 oder 2,
**dadurch gekennzeichnet,**
**dass** ein hermetischer Deckel vorgesehen ist, der den Stab eines hydraulischen Zylinders nach Frauenart hermetisch mit einer Möglichkeit des Gleitens längs des Stabs und der hermetischen Abdeckung der Abschöpfpfanne abdeckt.

4. Apparat nach Anspruch 1 oder 2,
**dadurch gekennzeichnet,**
**dass** ein hermetischer Deckel vorgesehen ist, der den Stab eines hydraulischen Zylinders nach Frauenart hermetisch mit einer Möglichkeit des Gleitens längs des Stabs und der hermetischen Abdeckung der Abschöpfpfanne mittels pneumatischer oder/und hydraulischer Zylinder (von 1 bis 4 pcs) oder/und einem elektrischen Antrieb abdeckt.

5. Apparat nach Anspruch 1 oder 2,
**dadurch gekennzeichnet,**
**dass** ein hermetischer Deckel vorgesehen ist, der den Stab eines hydraulischen Zylinders nach Frauenart hermetisch mit einer Möglichkeit des Gleitens längs des Stabs und der hermetischen Abdeckung der Abschöpfpfanne mittels pneumatischer oder/und hydraulischer Zylinder (von 1 bis 4 pcs) oder/und einem elektrischen Antrieb abdeckt und
**dass** mindestens ein oder mehrere Durchgangslöcher in der genannten Abdeckung vorgesehen sind, die eine Verbindung für eine Versorgung mit inertem Gas enthält.

6. Apparat nach Anspruch 1 oder 2,
**dadurch gekennzeichnet,**
**dass** er ferner ein oder mehrere Vibratoren der Abschöpfpfanne und/oder des Gekrätzdruckkopfs aufweist.

7. Apparat nach Anspruch 1 oder 2,
**dadurch gekennzeichnet,**
**dass** er ferner ein oder mehrere magneto-hydrodynamische (MHD) Pumpen zur Bewegung des Metalls zu einem oder mehreren Drainagelöchern im Boden der Abschöpfpfanne aufweist.

8. Apparat nach Anspruch 1 oder 2,
**dadurch gekennzeichnet,**
**dass** der Gekrätzdruckkopf hohl mit mindestens zwei Sammelleitungen mit Luftkühlung ausgebildet ist.

9. Apparat nach Anspruch 1 oder 2,
**dadurch gekennzeichnet,**
**dass** der Gekrätzdruckkopf gerippt ist.

10. Apparat nach Anspruch 1 oder 2,
**dadurch gekennzeichnet,**
**dass** die Abschöpfpfanne gerippt ist.

## Revendications

1. Appareil pour l'extraction de métaux non ferreux d'orfèvre chaud avec un cadre présentant une tête d'impression d'orfèvre, une forme d'ensemencement pour l'inclusion du métal drainé de l'orfèvre chaud et un bac d'écumage où la forme d'ensemencement est munie dans son fond d'un ou plusieurs trous de drainage
Est caractérisé de sorte que le fond de la forme d'ensemencement est muni au minimum d'un trou traversant à travers duquel un composé de génération d'un vide est produit à travers le fond du bac d'écumage où le composé scellé est disposé dans l'interstice entre le bac d'écumage et la forme d'ensemencement.

2. Appareil selon la revendication 1,
Est caractérisé de sorte qu'il
présente par ailleurs une garniture d'échantéité entre la tête d'impression d'orfèvre et le bac d'écumage.

3. Appareil selon la revendication 1 ou 2,
Est caractérisé de sorte qu'
Un couvercle hermétique est prévu qui couvre la tige d'un cylindre hydraulique à titre hermétique avec la possibilité de coulissement le long de la tige et le couvercle hermétique du bac d'écumage.

4. Appareil selon la revendication 1 ou 2,
Est caractérisé de sorte qu'
Un couvercle hermétique est prévu qui couvre la tige du cylindre hydraulique à titre hermétique avec la possibilité de coulissement le long de la tige et du couvercle hermétique du bac d'écumage par le biais du cylindre pneumatique ou/et hydraulique (de 1 à 4 pcs) ou d'une commande éléctrique..

5. Appareil selon la revendication 1 ou 2,
Est caractérisé de sorte qu'
Un couvercle hermétique est prévu qui couvre la tige d'un cylindre hydraulique à titre hermétique avec la possibilité de coulissement le long de la tige et du couvercle hermétique du bac d'écumage par le biais du cylindre pneumatique ou/et hydraulique (de 1 à 4 pcs) ou/et d'une commande éléctrique et qu'au minimum un ou plusieurs trous traversant sont prévus dans le couvercle cité contenant un composé pour une alimentation en gaz inerte.

6. Appareil selon la revendication 1 ou 2,
Est caractérisé de sorte qu'
Il présente par ailleurs un ou plusieurs vibrateurs du bac d'écumage et/ou une tête d'impression d'orfèvre.

7. Appareil selon la revendication 1 ou 2,
Est caractérisé de sorte qu'
Il présente par ailleurs un ou plusieurs pompes maghétiques-hydrodynamiques (MHD) pour le mouvement du métal à un ou plusieurs trous de drainage dans le fond du bac d'écumage.

8. Appareil selon la revendication 1 ou 2,
Est caractérisé de sorte que
La tête d'impression d'orfèvre est formée à titre creux avec au minimum deux conduits de recueil avec un refroidissement par air.

9. Appareil selon la revendication 1 ou 2,
Est caractérisé de sorte que
La tête d'impression d'orfèvre est striée.

10. Appareil selon la revendication 1 ou 2,
Est caractérisé de sorte que
Le bac d'écumage est strié.
